(19) Europäisches Patentamt
European Patent Office
Office européen des brevets

(11) **EP 3 030 505 B1**

(12) **EUROPÄISCHE PATENTSCHRIFT**

(45) Veröffentlichungstag und Bekanntmachung des Hinweises auf die Patenterteilung:
**11.10.2017 Patentblatt 2017/41**

(51) Int Cl.:
***B65G 21/20*** *(2006.01)*    ***B65G 47/14*** *(2006.01)*
***B65G 47/244*** *(2006.01)*    ***B65G 51/03*** *(2006.01)*

(21) Anmeldenummer: **14736690.0**

(22) Anmeldetag: **27.06.2014**

(86) Internationale Anmeldenummer:
**PCT/EP2014/063674**

(87) Internationale Veröffentlichungsnummer:
**WO 2015/018564 (12.02.2015 Gazette 2015/06)**

(54) **VORRICHTUNG UND VERFAHREN ZUM AUSRICHTEN VON UNRUNDEN BEHÄLTERN**

APPARATUS AND METHOD FOR ALIGNING NON-CIRCULAR CONTAINERS

APPAREIL ET PROCÉDÉ POUR ALIGNER DES RÉCIPIENTS NON CIRCULAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.08.2013 DE 102013215794**

(43) Veröffentlichungstag der Anmeldung:
**15.06.2016 Patentblatt 2016/24**

(73) Patentinhaber: **Krones AG**
**93073 Neutraubling (DE)**

(72) Erfinder:
• **LANDLER, Bruno**
**93073 Neutraubling (DE)**
• **SCHÖNFELDER, Markus**
**93073 Neutraubling (DE)**
• **KOLBINGER, Fabian**
**93073 Neutraubling (DE)**
• **BAUMGARTNER, Sebastian**
**93073 Neutraubling (DE)**
• **GLÖTZL, Reiner**
**93073 Neutraubling (DE)**

(74) Vertreter: **Grünecker Patent- und Rechtsanwälte PartG mbB**
**Leopoldstraße 4**
**80802 München (DE)**

(56) Entgegenhaltungen:
**EP-B1- 1 546 010    DE-C2- 3 016 940**
**GB-A- 2 490 505    US-A- 1 959 123**
**US-A- 3 462 001    US-A- 3 833 110**
**US-B1- 6 293 736**

## Beschreibung

Die vorliegende Erfindung betrifft eine Vorrichtung sowie ein Verfahren zum Ausrichten von unrunden Behältern, wie beispielsweise Flaschen, im Rahmen der Behälterbehandlung.

## Stand der Technik

Aus dem Stand der Technik sind Ausrichtvorrichtungen zum Ausrichten von Behältern, die auf Transportbändern befördert werden, bekannt. So zeigt beispielsweise die DE 32 39 541 A1 einseitig neben einem Förderband angebrachte Reibelemente, auf die ein auszurichtender Behälter zugedrängt wird und bis zum Erreichen einer bestimmten Position in Rotation versetzt wird. Dazu wird der Behälter auf dem Förderband schräg gestellt und von einer Stützfläche am kippen gehindert. Ist der Behälter nicht richtig ausgerichtet, wirkt bei Kontakt mit einem Reibelement ein Drehmoment auf ihn ein, sodass er so lange gedreht wird, bis er sich in der richtigen Position befindet und mit dem Reibelement nicht mehr in Kontakt steht. Aufgrund der erforderlichen Schrägstellung des Behälters, sind solche Vorrichtung für das Ausrichten von im Neck-Handling transportierten Behältern ungeeignet.

Die EP 2 489 614 A1 offenbart eine Transportvorrichtung, in der Behälter im Neck-Handling transportiert werden. Es sind unbewegliche Führungsschienen vorgesehen, die die im Neck-Handling transportierten Behälter entlang der vorgesehenen Transportstrecke führen. Diese Führung ist jedoch nur bedingt, wenn überhaupt, zum gezielten Ausrichten der Behälter in eine bestimmte Richtung geeignet, sondern erfordert vielmehr bereits korrekt ausgerichtete Behälter. Ferner zeigt auch die DE 601 25 727 T2 eine Beförderung von Behältern im Neck-Handling. Um hier ein Ausrichten der Behälter zu bewirken, sind beidseitig der Transportstrecke bewegbare, kammähnliche Formplatten angeordnet. Um einen Behälter auszurichten, wird der Behälter in einem entsprechenden Becher positioniert und die Formplatten werden aufeinander zu bewegt und weiterhin gegeneinander in entgegengesetzter Richtung verschoben, sodass ein Behälter in dem Becher gedreht wird. Die gesamte Konstruktion ist aufwendig und kann nicht für hohe Transportgeschwindigkeiten der Behälter verwendet werden.

Die US 3 462 001 A1 offenbart eine Vorrichtung und ein Verfahren zum Ausrichten von Behältern nach den Oberbegriffen der Ansprüche 1 und 10.

## Aufgabe

Ausgehend vom Stand der Technik ist es Aufgabe der vorliegenden Erfindung, ein Verfahren und eine Vorrichtung zum Ausrichten von in Transportstrecken im Neck-Handling mit hoher Geschwindigkeit bewegten Behälter bereitzustellen, das einfach und mit geringem konstruktiven Aufwand durchführbar ist und auch bei hohen Transportgeschwindigkeiten der Behälter ohne Gefahr einer Beschädigung der Behälter arbeitet.

## Lösung

Diese Aufgabe wird erfindungsgemäß durch die Vorrichtung zum Ausrichten von Behältern nach Anspruch 1 und das Verfahren zum Ausrichten von Behältern nach Anspruch 10 gelöst. Die Unteransprüche beinhalten zweckmäßige Ausgestaltungen der Erfindung.

Die Ausbildung einer entsprechenden Drehvorrichtung mit einem, vorzugsweise mehreren ortsfesten elastischen Drehelementen stellt hier eine passive Ausrichtvorrichtung dar, wodurch ein Ausrichten der Behälter nur aufgrund ihrer eigenen translatorischen Bewegung und dem durch die Drehelemente verursachten Drehmoment auf diese Behälter erreicht wird, was das Risiko von Fehlstellungen und Ausschuss erheblich verringert. In diesem Zusammenhang bedeutet elastisch, dass die Drehelemente, die durch einen passierenden Behälter ausgelenkt werden, nur durch eine Rückstellkraft (beispielsweise einer beim Passieren des Behälters gestauchten Feder) in ihre Ausgangsposition zurückkehren und zusätzliche Motoren so entfallen können.

Gemäß einer Ausführungsform sind zwei Drehvorrichtungen vorgesehen, die beidseitig der Transportstrecke angeordnet sind. So wird eine noch bessere und zuverlässigere Ausrichtung der Behälter gewährleistet.

Weiterhin können die Drehelemente in einem Abstand b senkrecht zur Mitte der Transportstrecke angeordnet sein. Dabei versteht sich unter der Mitte der Transportstrecke die Menge an Punkten die vom in Transportrichtung linken und rechten Rand der Transportstrecke den gleichen Abstand aufweist. Dies gilt sowohl für geradlinige als auch für krummlinige Transportstrecken. Durch diese Ausführung der Erfindung wird eine Passage in der Vorrichtung von Drehelementen freigehalten, die die Behälter ungehindert passieren können.

In einer Ausführungsform ist die Vorrichtung dadurch gekennzeichnet, dass die Drehelemente zwischen einem minimalen Abstand a/2 und einem maximalen Abstand d/2 zur Mitte der Transportstrecke elastisch ausgebildet sind. Durch geeignete Wahl der Abstände a/2 und d/2 wird erreicht, dass nahezu jeder Behälter, unabhängig von seiner Form, durch diese Vorrichtung zum Ausrichten in die gewünschte vorgegebene Orientierung oder Richtung ausgerichtet werden kann. In der erfindungsgemäßen Vorrichtung umfasst das Drehelement wenigstens ein Federelement. Durch geeignete Wahl der Federelemente kann erreicht werden, dass auszurichtende Behälter ein Drehmoment entsprechend dem Grad der Falschausrichtung erfahren und so schneller in die gewünschte Position gedreht werden können.

Ferner kann vorgesehen sein, dass die Drehelemente wenigstens zwei Reibungsflächen mit unterschiedlichen Reibungskoeffizienten umfassen. Durch das zusätzliche Vorsehen von Reibungsflächen an den Drehelementen kann ein zusätzliches Drehmoment auf einen falsch ausgerichteten Behälter ausgeübt werden, wodurch dieser effektiver in die gewünschte Position gedreht werden kann.

Die Vorrichtung kann gemäß einer Ausführungsform dadurch gekennzeichnet sein, dass in Transportrichtung der Behälter nach der Drehvorrichtung eine Stabilisierungseinrichtung vorgesehen ist, die geeignet ist einen Behälter an weiterer Drehung zu hindern. Durch Vorsehen dieser zusätzlichen Stabilisierungseinrichtung wird erreicht, dass korrekt ausgebildete Behälter nicht weiter in Rotation geraten, wodurch es zu einer erneuten Fehlstellung kommen könnte.

In einer Ausführungsform sind die Drehelemente geeignet, unterschiedlich große Drehmomente auf einen Behälter auszuüben. Diese unterschiedlich großen Drehmomente können beispielsweise genutzt werden, um bei Eintritt in die Vorrichtung zum Ausrichten ein möglichst großes Anfangsdrehmoment auf falsch ausgerichtete Behälter auszuüben, so dass diese auf einer kürzeren Wegstrecke bzw. in kürzerer Zeitspanne korrekt ausgerichtet werden, wohingegen gegen Ende der Ausrichtvorrichtung beispielsweise nur geringe Drehmomente auf falsch ausgerichtete Behälter ausgeübt werden, um noch geringfügige Korrekturen vorzunehmen.

In einer anderen Ausführungsform können die Drehelemente von einer Steuereinheit gesteuert werden. So kann beispielsweise die Position der Drehelemente gesteuert werden oder die Rückhaltekraft durch die beispielsweise Federelemente das Drehmoment auf den auszurichtenden Behälter ausüben.

Ferner kann vorgesehen sein, dass Sensoren zur Bestimmung der Ausrichtung eines Behälters vorgesehen sind, die geeignet sind, ein Signal, das indikativ für die Ausrichtung eines Behälters ist, an die Steuereinheit weiterzugeben, wobei die Steuereinheit geeignet ist, die Drehelemente in Abhängigkeit des Signals zu steuern. Diese Sensoren können beispielsweise Drucksensoren umfassen und falls nötig, kann die Steuereinheit z.B. die Position der Drehelemente verändern, um eine effektivere Ausrichtung der Behälter durch Übertragung größerer Drehmomente zu erreichen. Eine Ausführungsform des Verfahrens kann außerdem beinhalten, dass die Drehelemente sich während eines Umlenkvorgangs zwischen einem minimalen Abstand a/2 und einem maximalen Abstand d/2 senkrecht zur Mitte der Transportstrecke in Abhängigkeit von der Position des umzulenkenden Behälters bewegen. So können beispielsweise Federelemente ausgelenkt werden (durch die Berührung mit dem Behälter). Durch das Nachgeben der Federelemente wird gleichzeitig ein entsprechendes Drehmoment auf den Behälter ausgeübt, das umso größer ist, je weiter die Federelemente ausgelenkt werden.

In einer Ausführungsform ist das Verfahren dadurch gekennzeichnet, dass die Behälter nach Verlassen der Drehvorrichtung durch eine Stabilisierungseinrichtung an weiterer Drehung gehindert werden. Damit wird ein Abtransport der Behälter in der richtigen Ausrichtung erreicht, wodurch sie weiteren Behandlungsschritten zugeführt werden können.

In einer Ausführungsform können die unterschiedliche Drehelemente unterschiedlich große maximale Drehmomente auf einen Behälter übertragen. So kann je nach Anforderung das Verfahren zum Ausrichten der Behälter modifiziert werden und auf die Masse oder die Abmessungen der auszurichtenden Behälter angepasst werden.

In einer Ausführungsform des Verfahrens wird die Bewegung der Drehelemente durch eine Steuereinheit gesteuert und/oder Sensoren bestimmen die Ausrichtung eines Behälters und geben ein für die Ausrichtung des Behälters indikatives Signal an die Steuereinheit weiter, die die Drehelemente in Abhängigkeit dieses Signals steuert. Hier wird die Steuerung der Drehelemente auf Basis von Sensordaten automatisiert, wodurch Eingriffe eines Bedieners minimiert werden können und die Modifikation der Vorrichtung zum Ausrichten in Abhängigkeit von bestimmten Prozessparametern wesentlich schneller stattfinden kann.

## Kurze Beschreibung der Figuren

| | |
|---|---|
| Fig. 1 | Schematische Darstellung des allgemeinen Funktionsprinzips der Vorrichtung. |
| Fig. 2a+b | Schematische Darstellung einer erfindungsgemäßen Ausführungsform der Vorrichtung mit Federelementen. |
| Fig. 3 | Schematische Detailansicht eines Federelements. |
| Fig. 4a+b | Schematische Darstellung einer Vorrichtung, die kein Teil der Erfindung ist. |
| Fig. 4c | Schematische Darstellung einer Stabilisierungsvorrichtung. |

## Ausführliche Beschreibung

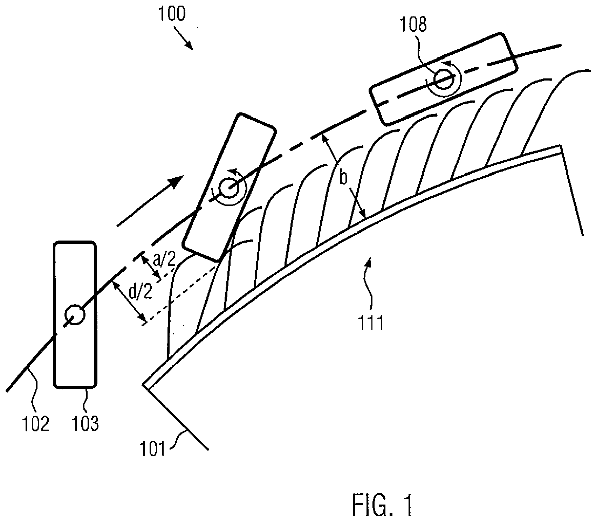

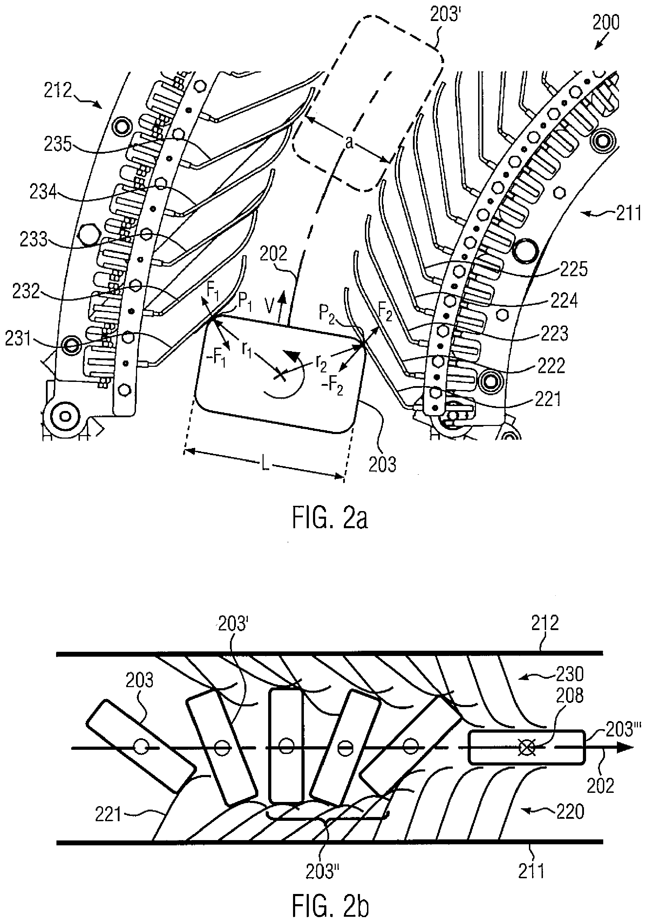

Fig. 1 ist eine schematische Darstellung einer Vorrichtung 100. Entlang einer Transportstrecke werden Behälter 103 transportiert. Dabei kann die Transportstrecke prinzipiell beliebig geformt sein. Insbesondere kann es sich um einen linearen Förderer (Förderband) handeln. Es kommen aber auch gekrümmte Transportstrecken in Frage, in denen die Behälter beispielsweise um eine Kurve transportiert werden. Die Behälter weisen ein nichtkreisförmiges Querschnittsprofil auf, können also beispielsweise oval oder rechteckig geformt sein. Grundsätzlich sind alle Querschnitte geeignet, die zumindest zwei unterschiedliche Abmessungen aufweisen. Im Fall eines rechteckigen Querschnitts wären das die Kantenlängen des Rechtecks oder die Diagonalen. Im Fall eines ovalen Behälterquerschnitts die Halbachsen. Der Transport findet vorzugsweise im Neckhandlingverfahren statt. Dazu sind hier nicht dargestellte aber hinreichend bekannte Vorrichtungen wie beispielsweise Luftführungen oder Halteklammern vorgesehen, die den Behälter am Flaschenhals greifen können. Der Behälter wird so geführt, dass er frei drehbar ist. Um unerwünschtes Verdrehen der transportierten Behälter 103 zu vermeiden, kann vorgesehen sein, dass der Behälter vor Erreichen des Anfangs 101 der Vorrichtung 100 zum Ausrichten fixiert wird, so dass zusätzliche Drehungen nicht möglich sind. Spätestens mit Erreichen des Anfangs 101 der Vorrichtung 100 wird diese Fixierung jedoch gelöst, so dass die Behälter prinzipiell entlang ihrer Mittelachse 108 gedreht werden können. Dazu umfasst die Vorrichtung 100 zum Ausrichten von Behältern wenigstens eine auf einer Seite der Transportstrecke 102 angeordnete Drehvorrichtungen 111. Diese ist prinzipiell ortsfest vorgesehen, d.h. die Position dieser Drehvorrichtung 111 ändert sich nicht, auch wenn einzelne Bestandteile sich bewegen können. Die Drehvorrichtung 111 ist mit mehreren Drehelementen ausgestattet, wie mit Bezug auf Fig. 2 weiter erläutert werden wird. Grundsätzlich ist der Aufbau der Drehvorrichtung 111 und insbesondere der in ihr enthaltenen Drehelemente derart, dass sich diese in Abhängigkeit der Position eines Behälters passiv, d.h. ohne motorische Einwirkung, bewegen können. Bevorzugt sind die Drehelemente elastische ausgebildet, sodass eine Bewegung im elastischen Bereich auftritt, die Drehelemente jedoch weiterhin ortsfest ausgebildet sind. Insbesondere bedeutet elastisch hier, dass die Drehelemente in ihre Ausgangsposition durch eine Rückstellkraft zurückkehren, nachdem ein Behälter sie passiert hat, wobei die Rückstellkraft nicht durch einen Motor, sondern durch die im Drehelement nach der Berührung mit dem Behälter gespeicherten Energie bewirkt wird. Beispiele dafür ist das vorübergehende Stauchen einer Feder, die wieder in ihre ursprüngliche Form zurückkehrt, sobald keine äußere Kraft mehr auf sie einwirkt. Die Bewegung der Drehelemente wird also durch die Behälter selbst, die entlang der Transportstrecke 102 durch die Vorrichtung 100 geführt werden, bewirkt. Es ist vorgesehen, dass die Drehelemente in einem Abstand b zur Mitte der Transportstrecke 102 befestigt sind.

Ferner kann vorgesehen sein, dass sich die in der Drehvorrichtung 111 enthaltenen Drehelemente derart elastisch bewegen können, dass sich ihr Abstand zur Mittellinie der Transportstrecke 102 während des Transports eines Behälters 103 durch sie hindurch von einem Wert a/2 auf einen Wert d/2 vergrößern kann. Obwohl der maximale Abstand d/2 nicht auf die maximalen Abmessungen eines durch die Vorrichtung 100 transportierten Behälters beschränkt ist, so ist doch vorgesehen, dass der maximale Abstand wenigstens so groß ist wie der halbe maximale Durchmesser eines durch die Vorrichtung 100 geführten Behälters. Dabei ist dieser maximale Durchmesser eines Behälters 103 definiert über die größte Entfernung zweier auf dem Rand des Behälters liegender Punkte in einer Ebene parallel zu der in Fig. 1 dargestellten Transportebene der Behälter. Der maximale Abstand der Drehelemente zur Mittellinie der Transportstrecke 102 kann größer, jedoch nicht kleiner sein. Für den minimalen Abstand a/2 gibt es prinzipiell keine Einschränkung, auch wenn es vorteilhaft ist, wenn dieser Abstand a/2 gerade so groß ist, dass ein korrekt ausgerichteter Behälter die Drehvorrichtung 111 ohne Berührung passieren kann. Die Ausrichtung eines Behälters 103, der durch die Vorrichtung 100 geführt wird, wird wenigstens zum Teil dadurch verursacht, dass auf ihn gemäß dem dritten Newtonschen Axiom ein Drehmoment wirkt, das der von ihm auf die Drehelemente übertragenen Kraft während des Transports durch die Drehvorrichtung 111 entspricht, bzw. davon abhängt.

Fig. 2a zeigt eine Ausführungsform der erfindungsgemäßen Vorrichtung. Hier sind zwei Drehvorrichtungen 211 und 212 vorgesehen, wovon eine auf der linken und eine auf der rechten Seite der Transportstrecke 202 angeordnet ist. In dieser Ausführungsform handelt es sich bei den Drehelementen, die in jeder Drehvorrichtung 211 und 212 vorgesehen sind, um Federelemente 221-225 bzw. 231-235. Gelangt ein falsch orientierter Behälter 203 in diese Vorrichtungen 211 und 212, so berührt er aufgrund seiner falschen Orientierung und damit größeren Abmessungen L, verglichen mit dem minimalen Abstand a der Drehelemente, diese Drehelemente. Da er sich mit einer bestimmten Geschwindigkeit v entlang der Transportstrecke 202 bewegt, übt der Behälter 203 eine Kraft $\vec{F}$ auf jedes der Federelemente 221-225 auf der einen Seite aus, sofern er diese berührt. Nach dem dritten Newtonschen Axiom wirkt eine entsprechende Kraft - $\vec{F}$ auf den Behälter 203. Da der Behälter 203 im Neckhandlingverfahren befördert wird und beweglich gelagert ist, kann eine Rotation um die Mittelachse 208 des Behälters erfolgen, wie hier anhand der Pfeilrichtungen dargestellt. Dementsprechend wirkt auf den Behälter in Abhängigkeit des Berührungspunktes $P_1$ bzw. $P_2$ mit den Drehelementen 231 und 221 ein Drehmoment $M_1 = -\vec{r_1} \times \vec{F_1}$ bzw. $M_2 = -\vec{r_2} \times \vec{F_2}$. Sofern die Summe aller auf den Behälter 203 einwirkender Drehmomente von Null verschieden ist, erfährt er eine Drehung derart, dass er in eine neue Position gedreht wird. Die stabilste Orientierung des Behälters in diesem System entspricht der, in der das geringste Gesamtdrehmoment auf ihn einwirkt. Aufgrund des zwischen den Vorrichtungen 211 und 212 freigelassenen Kanals mit Abstand a zwischen den Enden der Federelemente kann hier eine Vorzugsrichtung oder Orientierung des Behälters vorgegeben werden, in der dieser das minimale Drehmoment erfährt und daher entsprechend ausgerichtet wird. So wird ohne zusätzlichen Einsatz eines Motors erreicht, dass jeder ankommende Behälter 203 nach Passieren der Drehvorrichtungen 211 und 212 gemäß dem gestrichelt dargestellten Behälter 203' korrekt orientiert ist. Da alle anderen Orientierungen des Behälters 203, die nicht der Orientierung 203' (oder um 180° gedreht) entsprechen, ein höheres Drehmoment aufweisen, wird der Behälter nach Passieren der Vielzahl von Federelementen 221-225 und 231-235 in das globale Drehmomentminimum gezwungen worden sein und dementsprechend die Ausrichtung 203' oder eine um 180° gedrehte Ausrichtung aufweisen, so dass er weiteren Behandlungseinrichtungen zugeführt werden kann. Um diesen Ausrichteffekt zu verstärken, kann vorgesehen sein, dass der Abstand der Federelemente einer Drehvorrichtung zufällig in einem kleinen Bereich um einen bestimmten Wert h variiert. So kann die Ausbildung lokaler Drehmomentminima, in denen der Behälter verweilen könnte, unterdrückt werden.

Ein entsprechend vollständiger Vorgang zum Ausrichten eines Behälters 203 ist schematisch in Fig. 2b dargestellt. Der Behälter 203 erreicht in willkürlicher Orientierung ein erstes Federelement 221. Durch dieses erfährt der Behälter 203 eine erste Drehung und wird in eine erste gedrehte Position 203' geführt. Anschließend kommt er mit weiteren Federelementen aus der Vielzahl von Federelementen 220 und 230 der Drehvorrichtungen 211 und 212 in Berührung, so dass er weitere Drehmomente erfährt, die ihn über die Zwischenausrichtungen 203" in eine schließliche Orientierung 203''' führen, die der gewünschten Orientierung entspricht, in der der Behälter 203''' nur ein minimales Drehmoment erfährt. Ist in dieser Position noch nicht das Ende der Drehvorrichtungen 211 und 212 erreicht, so kann es, sofern die Vorrichtungen 211 und 212 eine Krümmung aufweisen, zu weiteren Drehungen kommen, wobei der Behälter jedoch nur wenig aus seinem stabilen Minimum in der Orientierung 203''' hinausgedreht wird und in diese Orientierung auch wieder hineinrutscht.

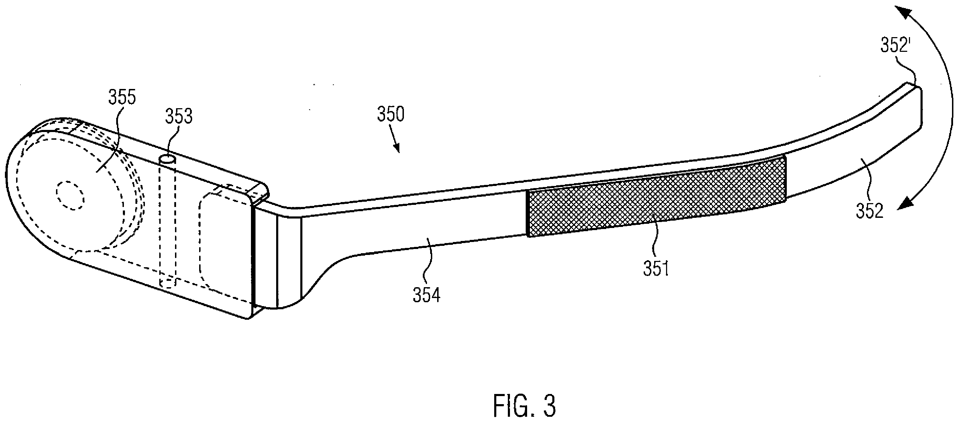

Fig. 3 zeigt eine erfindungsgemäße Ausführungsform eines der in Fig. 2a und b dargestellten Federelemente 350. Dieses Federelement umfasst einen Federarm 354, der in die Transportstrecke der Behälter hineinragt, wie in Fig. 2 dargestellt. Dieser Federarm 354 ist um eine Drehachse 353 drehbar gelagert, wobei die Federkonstante sich über die Stärke eines integrierten Magneten 355 ergibt. Je stärker dieser Magnet ist, desto mehr Kraft ist nötig, um die Feder um eine bestimmte Strecke auszulenken bzw. um die Drehachse 353 zu verdrehen. Um die Wirkung auf nicht richtig positionierte Behälter zu erhöhen, kann weiterhin vorgesehen sein, dass der Federarm 354 wenigstens zwei unterschiedliche Flächen 351 und 352 umfasst. Die Fläche 352, die einen Teil der Spitze des Federarms 354 bedeckt, kann einen möglichst geringen Reibungskoeffizienten aufweisen, so dass ein Behälter, der den Federarm 354 an dieser Fläche berührt, an diesem vorbeigleitet, ohne ein wesentliches Drehmoment zu erfahren, das ihn aus seiner aktuellen Position auslenken würde. Das ist von Vorteil, da ein korrekt orientierter Behälter den Federarm 354 höchstens an dieser Stelle berührt. Eine zweite Fläche 351 kann mit einer Beschichtung mit deutlich höherem Reibungskoeffizient versehen sein. Dadurch wird auf einen an dieser Stelle mit dem Federarm in Berührung kommenden Behälter ein großes Drehmoment ausgeübt (verglichen mit einer Berührung der Spitze 352), wodurch der Behälter in eine andere Position gedreht wird. Es kann auch vorgesehen sein, dass sich der Reibungskoeffizient entlang des Federarms 354 entsprechend einer vorgegebenen Funktion ändert. So kann er beispielsweise in Abhängigkeit von der Entfernung zur Spitze 352' des Federarms 354 kontinuierlich zunehmen, beispielsweise über einen linearen Zusammenhang oder einen beliebig anderen funktionalen Zusammenhang. So kann erreicht werden, dass ein Drehmoment auf nicht korrekt orientierte Behälter einwirkt, das umso größer ist, je mehr die Orientierung des Behälters von der gewünschten Orientierung abweicht, ohne dass dafür eine Steuerung der Federelemente über Motoren o.ä. nötig wäre. Dadurch wird ein zunächst falsch orientierter Behälter durch starke Bewegung zunächst grob in die korrekte Orientierung gebracht, wobei die folgende, feinere Einstellung der Orientierung durch Berührung mit Teilen des Federarms 354 mit geringerem Reibungskoeffizient erreicht wird.

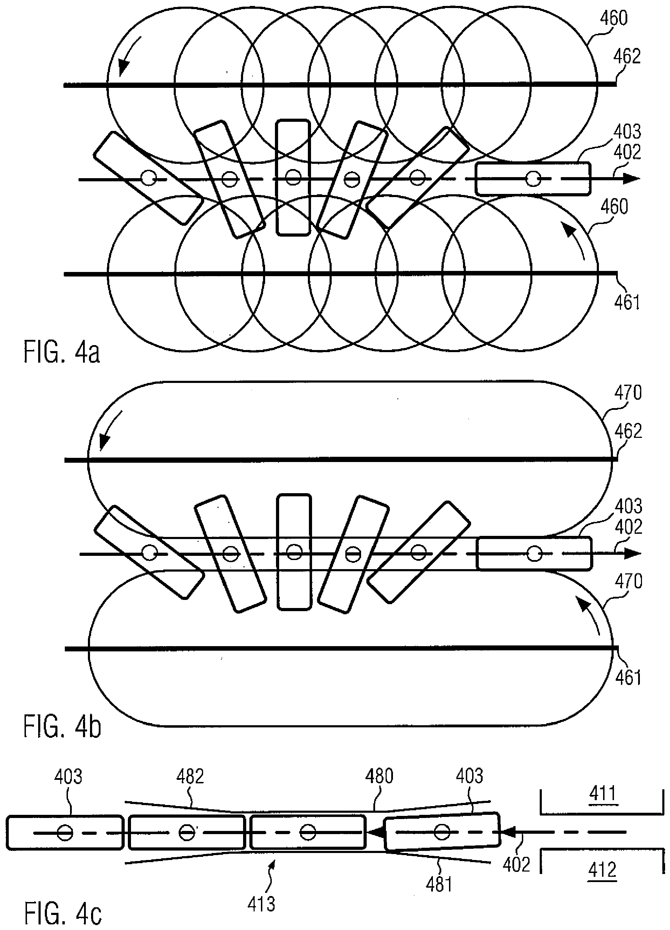

Fig. 4 zeigt weitere Ausführungsformen der Drehelemente, die kein Teil der Erfindung sind. In Fig. 4a ist eine Anzahl von Rädern 460 dargestellt, die nur einseitig oder beidseitig der Transportstrecke 402 angeordnet sein können. Die Räder sind drehbar auf einer Achse 461 und 462 auf beiden Seiten der Transportstrecke 402 gelagert. Dabei umfasst die entsprechende Drehvorrichtung auf jeder Seite eine Vielzahl von Rädern 460. Diese können als Reibräder ausgebildet sein, also einen hohen Reibungskoeffizienten aufweisen. Auch hier kann es vorteilhaft sein, wenn der Reibungskoeffizient jedes Reibrades in Abhängigkeit von der Position entlang der Transportstrecke 402 variiert. So kann er am Anfang der Vorrichtung zum Ausrichten sehr groß sein und in Transportrichtung der Behälter weiter abnehmen. Vorzugsweise rotieren die Reibräder auf beiden Seiten der Transportstrecke 402 in dieselbe Richtung, so dass ein Behälter in eine bestimmte Orientierung gezwungen wird. Dabei können die Reibräder durch separate (für jedes Reibrad einen) Motoren angetrieben werden, oder durch einen gemeinsamen Motor. Ebenso kann vorgesehen sein, dass die Reibräder, analog zu den oben beschriebenen Federelementen, nur durch die von den Behältern beim Passieren übertragene Kraft in Rotation versetzt werden. Es kann weiterhin vorteilhaft sein, wenn der Abstand zwischen den Reibrädern der links und rechts von der Transportstrecke 402 gelegenen Vorrichtungen variabel ist, so dass sie von einem falsch orientierten Behälter ausgelenkt bzw. weggedrückt werden können und so Verkantungen vermieden werden. Das kann beispielsweise durch Lagerung der Reibräder mittels Federn erreicht werden, die gestaucht werden, wenn ein Behälter ein Reibrad wegdrückt und wobei das Reibrad nach Passieren des Behälters wieder in seine ursprüngliche Position zurückkehrt. Die Reibräder sind in diesem Sinne dann elastisch ausgebildet. Auch eine Abstandsteuerung über einen Motor kann hier vorteilhaft sein, wenn die Vorrichtung zum Ausrichten verschiedener Behältergrößen genutzt werden soll. Um die Anzahl der Reibräder pro Vorrichtung erhöhen zu können, können diese in Richtung der Längsachse der hindurchtransportierten Behälter bzw. senkrecht zur Transportebene versetzt zueinander angeordnet sein, so dass ein Reibrad mit einem Versatz in vertikaler Richtung zu seinen benachbarten Reibrädern angeordnet werden kann.

Fig. 4b zeigt eine weitere Ausführungsform, die kein Teil der Erfindung ist, in der anstelle der Reibräder links und rechts der Transportstrecke 402 umlaufende Ketten oder Riemen 470 in den Drehvorrichtungen 461 und 462 angeordnet sind. Auch hier kann eine Rotation durch Motoren bewirkt werden oder durch die Berührung mit Behältern. Die Ketten können sowohl einseitig als auch beidseitig vorgesehen sein. Da die Kette entlang der gesamten Vorrichtung rotiert, bietet sich die Verwendung unterschiedlicher Reibungskoeffizienten hier nicht an. Jedoch kann auch hier vorgesehen sein, dass die Kette durch einen schiefstehenden Behälter deformiert bzw. von der Mitte der Transportstrecke weggedrückt werden kann und so ein größeres Drehmoment auf den Behälter einwirken kann. Dazu genügt es, wenn der Riemen oder die Kette aus hinreichend elastischem Material besteht, beispielsweise Gummi, der durch einen falsch positionierten Behälter dann weggedrückt und dabei gedehnt wird. Durch die Spannung im Riemen erfolgt eine Rückkehr des Riemens in seine ursprüngliche Form durch Relaxation nachdem der Behälter die Vorrichtung passiert hat.

Weiterhin zeigt Fig. 4c eine zusätzliche Stabilisierungsvorrichtung 413, die beispielsweise am Ende der erfindungsgemäßen Vorrichtung zum Ausrichten mit den beidseitigen Drehvorrichtungen 411 und 412 vorgesehen sein kann. Diese Stabilisierungseinrichtung 413 kann dabei einen Eingangsbereich 481 umfassen, der so breit ist, dass er auch Behälter 403 aufnehmen kann, die geringfügig gegenüber der idealen Ausrichtung verdreht sind. Diesem Bereich schließt sich ein weiterer mittlerer Bereich 480 an, dessen Abmessungen nur minimal, beispielsweise 1 cm, bevorzugt weniger als 5 mm, von denen eines ideal orientierten Behälters abweichen, so dass die korrekt orientierten Behälter mit Eintritt in die Stabilisierungseinrichtung 413 korrekt ausgerichtet sind. Weitere Rotationen werden durch die Stabilisierungseinrichtung 413 dann unterbunden. Der Auslaufbereich 482 ist in Auslaufrichtung der Behälter 403 ebenfalls geöffnet, sodass nach Verlassen der Stabilisierungseinrichtung 413 keine Kräfte mehr auf den Behälter einwirken, die eine Verdrehung bewirken könnten.

Grundsätzlich kann in jeder der dargestellten Ausführungsformen eine Steuereinheit vorgesehen sein, die die Drehvorrichtungen steuern kann. Weiterhin können Sensoren vorgesehen sein, die beispielsweise die Größe eines Behälters erfassen und den Abstand der Drehelemente der Drehvorrichtungen zueinander vergrößern oder verkleinern, um die maximale Wirkung beim Ausrichten des Behälters zu erzielen. Weiterhin kann vorgesehen sein, dass die Steuereinrichtung geeignet ist, die maximal oder minimal auf die Behälter übertragenen Drehmomente zu steuern. Anhand der in Fig. 2 und 3 dargestellten Federelemente kann das beispielsweise so realisiert werden, dass der Magnet als Elektromagnet ausgebildet ist, genauso wie sein entsprechendes Gegenstück. Durch Steuerung der Stromzufuhr der Elektromagneten kann dann erreicht werden, dass das Federelement bzw. jedes Federelement, schwerer oder leichter auszulenken ist, da durch die Stärke der Elektromagneten die Federkonstante des gesamten Federelements bestimmt werden kann. Da die auf den Behälter zurückwirkende Kraft bzw. das Drehmoment maßgeblich von dieser abhängt, ergibt sich hier eine sehr effektive Steuerung des Verhaltens jedes Drehelements der Drehvorrichtungen.

## Patentansprüche

1. Vorrichtung (100) zum Ausrichten von Behältern mit unrundem Querschnitt, insbesondere Flaschen, die im Neck-Handling entlang einer Transportstrecke (102) transportiert werden, umfassend wenigstens eine entlang der Transportstrecke (102) angeordnete Drehvorrichtung (111, 211, 212) wobei die Drehvorrichtung (111, 211, 212) ortsfest ausgebildet ist und ein oder mehrere ortsfeste, elastische Drehelemente (221-225, 231-235) umfasst, die geeignet sind, einen Behälter (103) in eine vorgegebene Richtung auszurichten, **dadurch gekennzeichnet, dass** das eine oder die mehreren Drehelemente (221-225, 231-235) wenigstens ein Federelement (350) umfassen, wobei das Federelement (350) einen Federarm (354), eine Drehachse (353) mit der das Federelement (350) drehbar gelagert befestigt ist, und einen integrierten Magneten (355) umfasst.

2. Vorrichtung nach Anspruch 1, **dadurch gekennzeichnet, dass** zwei Drehvorrichtungen (211, 212) vorgesehen sind, die beidseitig der Transportstrecke angeordnet sind.

3. Vorrichtung nach Anspruch 1 oder 2, **dadurch gekennzeichnet, dass** die Drehelemente (221-225, 231-235) in einem Abstand b senkrecht zur Mitte der Transportstrecke (102) angeordnet sind.

4. Vorrichtung nach einem der Ansprüche 1 bis 3, **dadurch gekennzeichnet, dass** die Drehelemente (221-225, 231-235) zwischen einem minimalen Abstand a/2 und einem maximalen Abstand d/2 zur Mitte der Transportstrecke (102) elastisch ausgebildet sind.

5. Vorrichtung nach einem der Ansprüche 1 bis 4, **dadurch gekennzeichnet, dass** die Drehelemente (221-225, 231-235) wenigstens zwei Reibungsflächen (351, 352) mit unterschiedlichen Reibungskoeffizienten umfassen.

6. Vorrichtung nach einem der Ansprüche 1 bis 5, **dadurch gekennzeichnet, dass** in Transportrichtung (102) der Behälter nach der Drehvorrichtung (211, 212) eine Stabilisierungseinrichtung (413) vorgesehen ist, die geeignet ist einen Behälter an weiterer Drehung zu hindern.

7. Vorrichtung nach einem der Ansprüche 1 bis 6, **dadurch gekennzeichnet, dass** die Drehelemente (221-225, 231-235) geeignet sind, unterschiedlich große Drehmomente auf einen Behälter auszuüben.

8. Vorrichtung nach Anspruch 1 bis 7, **dadurch gekennzeichnet, dass** die Drehelemente (221-225, 231-235) von einer Steuereinheit gesteuert werden können.

9. Vorrichtung nach Anspruch 8, **dadurch gekennzeichnet, dass** Sensoren zur Bestimmung der Ausrichtung eines Behälters vorgesehen sind, die geeignet sind, ein Signal, das indikativ für die Ausrichtung eines Behälters ist, an die Steuereinheit weiterzugeben, wobei die Steuereinheit geeignet ist, die Drehelemente (221-225, 231-235) in Abhängigkeit des Signals zu steuern.

10. Verfahren zum Ausrichten von im Neck-Handling entlang einer Transportstrecke (102) transportierter Behältern mit unrundem Querschnitt, insbesondere Flaschen, die ohne definierte Ausrichtung transportiert werden, wobei wenigstens einseitig entlang der Transportstrecke eine ortsfeste Drehvorrichtung (111, 211, 212) mit einem oder einer Vielzahl von ortsfesten, elastischen Drehelementen (221-225, 231-235) angeordnet ist, die einen Behälter in eine vorgegebene Richtung ausrichtet, **dadurch gekennzeichnet, dass** das Drehelement (221-225, 231-235) ein Federelement (350) aufweist, wobei das Federelement (350) einen Federarm (354), eine Drehachse (353) mit der das Federelement (350) drehbar gelagert befestigt ist, und einen integrierten Magneten (355) umfasst.

11. Verfahren nach Anspruch 10, **dadurch gekennzeichnet, dass** die Drehelemente (221-225, 231-235) sich während eines Umlenkvorgangs zwischen einem minimalen Abstand a/2 und einem maximalen Abstand d/2 senkrecht zur Mitte der Transportstrecke (102) in Abhängigkeit von der Position des umzulenkenden Behälters bewegen.

12. Verfahren nach Anspruch 10 oder 11, **dadurch gekennzeichnet, dass** die Behälter nach Verlassen der Drehvorrichtung (211, 212) durch eine Stabilisierungseinrichtung (480) an weiterer Drehung gehindert werden.

13. Verfahren nach einem der Ansprüche 10 bis 12, **dadurch gekennzeichnet, dass** die unterschiedlichen Drehelemente (221-225, 231-235) unterschiedlich große maximale Drehmomente auf einen Behälter übertragen können.

14. Verfahren nach einem der Ansprüche 10 bis 12, **dadurch gekennzeichnet, dass** die Bewegung der Drehelemente (221-225, 231-235) durch eine Steuereinheit gesteuert wird und/oder dass Sensoren die Ausrichtung eines Behälters bestimmen und ein für die Ausrichtung des Behälters indikatives Signal an die Steuereinheit weitergeben, die die Drehelemente (221-225, 231-235) in Abhängigkeit dieses Signals steuert.

**Claims**

1. Apparatus (100) for aligning containers having a noncircular cross-section, in particular bottles, which are transported along a transport path (102) by way of neck handling, comprising at least one rotary device (111, 211, 212) arranged along said transport path (102), wherein said rotary device (111, 211, 212) is made stationary and comprises one or plural stationary resilient rotary elements (221-225, 231-235) which are suitable for aligning a container (103) in a specified direction, **characterized in that** said one or plural rotary elements (221-225, 231-235) comprise at least one spring element (350), wherein said spring element (350) comprises a spring arm (354), an axis of rotation (353) with which said spring element (350) is rotatably mounted, and an integrated magnet (355).

2. Apparatus according to claim 1, **characterized in that** two rotary devices (211, 212) are provided which are arranged on both sides of said transport path.

3. Apparatus according to claim 1 or 2, **characterized in that** said rotary elements (221-225, 231-235) are disposed at a distance b perpendicular to the center of said transport path (102).

4. Apparatus according to one of the claims 1 to 3, **characterized in that** said rotary elements (221-225, 231-235) are formed to be resilient between a minimum distance a/2 and a maximum distance d/2 from said center of said transport path (102).

5. Apparatus according to one of the claims 1 to 4, **characterized in that** said rotary elements (221-225, 231-235) comprise at least two friction surfaces (351, 352) having different friction coefficients.

6. Apparatus according to one of the claims 1 to 5, **characterized in that** a stabilizing device (480) is provided in the direction of transport (102) of said containers downstream of said rotary device (211, 212) and is adapted to prevent a container from further rotating.

7. Apparatus according to one of the claims 1 to 6, **characterized in that** said rotary elements (221-225, 231-235) are adapted to exert torques of different magnitudes onto a container.

8. Apparatus according to claims 1 to 7, **characterized in that** said rotary elements (221-225, 231-235) can be controlled by a control unit.

9. Apparatus according to claim 8, **characterized in that** sensors for determining the alignment of a container are provided which are suitable to deliver a signal being indicative of the alignment of a container to said control unit, wherein said control unit is adapted to control said rotary elements (221-225, 231-235) in dependence of said signal.

10. Method for aligning containers having a noncircular cross-section, in particular bottles, which are transported along a transport path (102) by way of neck handling, and which are transported without defined alignment, where a stationary rotary device (111) with one or a plurality of stationary resilient rotary elements (221-225, 231-235) aligning a container in a specified direction is disposed at least on one side along said transport path, **characterized in that** said rotary element (221-225, 231-235) comprises a spring element (350), wherein said spring element (350) comprises a spring arm (354), an axis of rotation (353) with which said spring element (350) can be rotatably mounted, and an integrated magnet (355).

11. Method according to claim 10, **characterized in that** during a deflection operation said rotary elements (221-225, 231-235) move between a minimum distance a/2 and a maximum distance d/2 perpendicular to the center of said transport path (102) in dependence of the position of said container to be deflected.

12. Method according to claim 10 or 11, **characterized in that** said containers after leaving said rotary device (211, 212) are prevented by a stabilizing device (480) from further rotating.

13. Method according to one of the claims 10 to 12, **characterized in that** said different rotary elements (221-225, 231-235) can transmit torques of different magnitudes onto a container.

14. Method according to one of the claims 10 to 12, **characterized in that** the movement of said rotary elements (221-225, 231-235) is controlled by a control unit and/or **in that** sensors determine the alignment of a container and deliver a signal being indicative of the alignment of said container to said control unit which controls said rotary elements (221-225, 231-235) in dependence of said signal.

## Revendications

1. Dispositif (100) destiné à l'orientation de contenants à section transversale non circulaire, notamment des bouteilles, qui sont transportés selon un mode de guidage au col le long d'un parcours de transport (102), le dispositif comprenant au moins un dispositif de rotation (111, 211, 212) agencé le long du parcours de transport (102), et le dispositif de rotation (111, 211, 212) étant d'une configuration en position fixe et comprenant un ou plusieurs éléments de rotation (221-225, 231-235) élastiques et en position fixe, qui sont adaptés à orienter un contenant (103) dans une direction prédéterminée,
**caractérisé
en ce que** ledit un ou les plusieurs éléments de rotation (221-225, 231-235) comportent au moins un élément de ressort (350), l'élément de ressort (350) comprenant un bras de ressort (354), un axe de rotation (353) à l'aide duquel l'élément de ressort (350) est fixé en étant monté rotatif, et un aimant (355) intégré.

2. Dispositif selon la revendication 1, **caractérisé en ce que** sont prévus deux dispositifs de rotation (211, 212), qui sont agencés de part et d'autre du parcours de transport.

3. Dispositif selon la revendication 1 ou la revendication 2, **caractérisé en ce que** les éléments de rotation (221-225, 231-235) sont agencés à une distance b perpendiculairement au centre du parcours de transport (102).

4. Dispositif selon l'une des revendications 1 à 3, **caractérisé en ce que** les éléments de rotation (221-225, 231-235) sont d'une configuration élastique entre une distance minimale a/2 et une distance maximale d/2 au centre du parcours de transport (102).

5. Dispositif selon l'une des revendications 1 à 4, **caractérisé en ce que** les éléments de rotation (221-225, 231-235) comportent au moins deux surfaces de friction (351, 352) avec des coefficients de frottement différents.

6. Dispositif selon l'une des revendications 1 à 5, **ca-**

**ractérisé en ce qu'**après le dispositif de rotation (211, 212), en se référant à la direction de transport (102) des contenants, il est prévu un dispositif de stabilisation (413), qui est adapté à empêcher une rotation supplémentaire du contenant.

7. Dispositif selon l'une des revendications 1 à 6, **caractérisé en ce que** les éléments de rotation (221-225, 231-235) sont adaptés à exercer des couples de grandeur différente sur un contenant.

8. Dispositif selon les revendications 1 à 7, **caractérisé en ce que** les éléments de rotation (221-225, 231-235) peuvent être commandés par une unité de commande.

9. Dispositif selon la revendication 8, **caractérisé en ce que** sont prévus des capteurs pour déterminer l'orientation d'un contenant, qui sont adaptés à transmettre à l'unité de commande un signal indicatif pour l'orientation d'un contenant, l'unité de commande étant adaptée à commander les éléments de rotation (221-225, 231-235) en fonction dudit signal.

10. Procédé destiné à l'orientation de contenants à section transversale non circulaire, notamment des bouteilles, qui sont transportés selon un mode de guidage au col le long d'un parcours de transport (102), et sont transportés sans orientation définie, un dispositif de rotation (111, 211, 212) avec un ou plusieurs éléments de rotation (221-225, 231-235) élastiques et en position fixe étant agencé au moins d'un côté le long du parcours de transport et assurant l'orientation d'un contenant dans une direction prédéterminée, **caractérisé en ce que** l'élément de rotation (221-225, 231-235) comporte au moins un élément de ressort (350), l'élément de ressort (350) comprenant un bras de ressort (354), un axe de rotation (353) à l'aide duquel l'élément de ressort (350) est fixé en étant monté rotatif, et un aimant (355) intégré.

11. Procédé selon la revendication 10, **caractérisé en ce que** les éléments de rotation (221-225, 231-235) se déplacent pendant une phase de déviation, entre une distance minimale a/2 et une distance maximale d/2 perpendiculairement au centre du parcours de transport (102), en fonction de la position du contenant à dévier.

12. Procédé selon la revendication 10 ou la revendication 11, **caractérisé en ce qu'**après avoir quitté le dispositif de rotation (211, 212), les contenants sont empêchés de tourner davantage par un dispositif de stabilisation (480).

13. Procédé selon l'une des revendications 10 à 12, **caractérisé en ce que** les différents éléments de rotation (221-225, 231-235) peuvent transmettre des couples maximums de grandeur différente à un contenant.

14. Procédé selon l'une des revendications 10 à 12, **caractérisé en ce que** le mouvement des éléments de rotation (221-225, 231-235) est commandé par une unité de commande, et/ou **en ce que** des capteurs déterminent l'orientation d'un contenant et transmettent un signal indicatif pour l'orientation du contenant, à l'unité de commande, qui commande les éléments de rotation (221-225, 231-235) en fonction de ce signal.

FIG. 1

FIG. 2a

FIG. 2b

11

FIG. 3

FIG. 4a

FIG. 4b

FIG. 4c

**IN DER BESCHREIBUNG AUFGEFÜHRTE DOKUMENTE**

**In der Beschreibung aufgeführte Patentdokumente**

- DE 3239541 A1
- EP 2489614 A1
- DE 60125727 T2
- US 3462001 A1